# FASCICULE DE BREVET EUROPEEN

(11) **EP 3 612 784 B1**
(45) Date de publication et mention de la délivrance du brevet: **25.12.2024**
(21) Numéro de dépôt: 18717091.5
(22) Date de dépôt: 19.04.2018
(51) Int. Cl.: F41G 3/14, G01S 7/497, F41H 5/22, H04N 7/18, B60S 1/52, G02B 27/64, G02B 27/00, G01S 17/02, B08B 3/02, G01S 7/48, F41G 3/22, F41H 5/26, F41G 3/06, F41G 3/16

(54) **SYSTÈME OPTRONIQUE POUR PLATE-FORME ET PLATE-FORME ASSOCIÉE**
OPTRONISCHES SYSTEM FÜR PLATTFORM UND ZUGEHÖRIGE PLATTFORM
OPTRONIC SYSTEM FOR PLATFORM AND ASSOCIATED PLATFORM

(30) Priorité: 19.04.2017 FR 1700430
(43) Date de publication de la demande: 26.02.2020
(73) Titulaire: Thales, 92400 Courbevoie (FR)
(72) Inventeur: THIBOUT, Paul, 78995 Elancourt Cedex (FR); GARIN, Olivier, 78995 Elancourt Cedex (FR)
(74) Mandataire: Lavoix
(86) Numéro de dépôt international: PCT/EP2018/060000
(87) Numéro de publication internationale: WO 2018/193023

(56) Documents cités:
- EP-A1- 0 887 680
- WO-A2-2006/017402
- WO-A2-2013/055422
- DE-B3- 102015 122 843
- JP-A- 2017 067 559
- US-A1- 2008 291 075
- US-A1- 2012 024 143
- US-B1- 7 202 809

## Description

La présente invention concerne un système optronique. La présente invention se rapporte également à une plate-forme équipée d'un tel système optronique.

Dans le domaine de l'observation et de la protection de véhicule, il est connu d'utiliser un dispositif d'observation à courte distance avec un autre dispositif d'observation à longue distance.

Pour cela, le dispositif d'observation à courte distance comporte un équipement de vision hémisphérique installé sur un véhicule.

Un tel équipement fournit à un opérateur du véhicule des informations sur l'environnement extérieur au véhicule. Parmi ces informations, il est notamment fourni des images en temps réel à 360° avec une élévation comprise entre 75° et -15° dont chaque point est référencé avec précision.

Dans certains cas, l'équipement est également propre à fournir des informations de détection de cible mobile (parfois désigné sous le sigle DCM), des informations de détection d'alerte laser (parfois désigné sous le sigle DAL) et des informations de détection de départ de missiles (parfois désigné sous le sigle DDM).

Pour tenter au mieux de couvrir l'ensemble de l'environnement du véhicule sans zone de masquage, plusieurs équipements de vision sont usuellement disposés sur le pourtour du véhicule. Cela implique qu'il convient de réaliser une fusion des images provenant de chaque équipement pour restituer une seule image à l'opérateur.

Toutefois, une telle fusion est délicate à réaliser en temps réel et implique, par construction, des problèmes de paralaxe et des problèmes liés à la présence des zones aveugles qui sont particulièrement gênants lorsque les équipements fournissent également des informations de détection de cible mobile, de détection d'alerte laser et de détection de départ de missiles.

En outre, lors du mouvement du véhicule, la fusion est encore plus difficile puisqu'il convient également de compenser les distortions introduites par un tel mouvement sur une image. Notamment, lorsque le véhicule tourne, le mouvement engendre un flou sur les images à compenser.

Il existe donc un besoin pour un système optronique apte à fournir les informations précitées sur l'environnement d'une plate-forme et qui soit de mise en oeuvre aisée.

Pour cela, la présente description décrit un système optronique pour plate-forme selon la revendication 1.

Suivant des modes de réalisation particuliers, le système optronique comprend une ou plusieurs des caractéristiques suivantes, prise(s) isolément ou suivant toutes les combinaisons techniquement possibles :
- le capteur est positionné sur une interface mécanique, l'interface mécanique étant fixée sur le support.
- le système optronique est pourvu d'un blindage de protection indépendant du support.
- le système optronique est pourvu d'un dispositif de nettoyage du dispositif de vision hémisphérique, le dispositif de nettoyage comportant une buse de projection, la buse de projection étant positionnée sur le blindage.
- le calculateur comporte des moyens pour commander le temps d'exposition, le gain, et la cadence image du détecteur en fonction des conditions d'environnement, des moyens pour stabiliser l'image en fonction des mouvements du système ou des moyens d'affichage, des moyens pour détecter des régions de la scène nouvellement démasquées, pour détecter et pister des évènements ou mouvements dans la scène, pour incruster dans l'image affichée des informations issues d'autres interfaces.
- le système optique comporte une pluralité d'objectifs ayant un champ moins étendue qu'un champ hémisphérique.
- le capteur comporte une pluralité de détecteurs munis chacun d'une optique, l'ensemble des optiques formant le système optique.

La présente description se rapporte aussi à une plate-forme comportant un système optronique tel que décrit précédemment.

Suivant des modes de réalisation particuliers, la plate-forme comprend une ou plusieurs des caractéristiques suivantes, prise(s) isolément ou suivant toutes les combinaisons techniquement possibles :
- la plate-forme présente une paroi, le support étant positionné sur la paroi.
- la plate-forme est un véhicule comportant une tourelle, le support étant positionné sur la tourelle.

D'autres caractéristiques et avantages de l'invention apparaîtront à la lecture de la description qui suit de modes de réalisation de l'invention, donnée à titre d'exemple uniquement, et en référence aux dessins qui sont :
- figure 1, une vue schématique d'un véhicule pourvu d'un exemple de système optronique, et
- figure 2, une vue schématique de côté du système optronique de la figure 1.

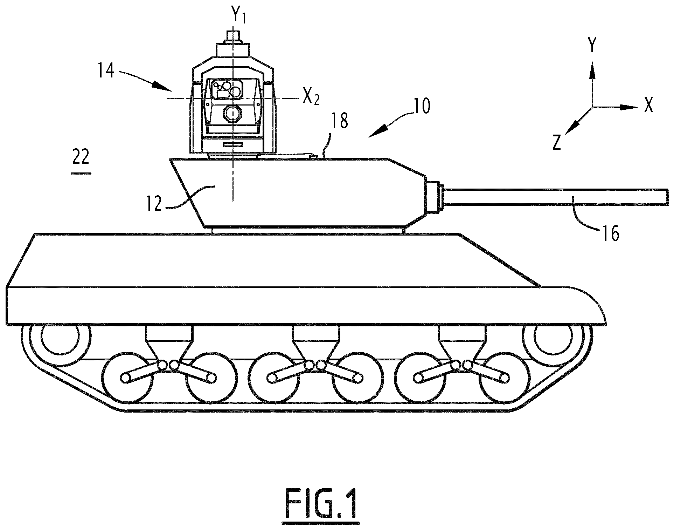

La figure 1 représente un véhicule 10.

Le véhicule 10 est un véhicule terrestre.

Par exemple, le véhicule 10 est un véhicule de type militaire tel qu'un char d'assaut.

Un tel véhicule 10 est adapté à comporter une pluralité d'armes et à protéger au moins un opérateur installé à l'intérieur du véhicule 10.

Selon l'exemple décrit, le véhicule 10 est muni d'une tourelle 12 sur laquelle est positionné une partie d'un système optronique 14.

Par exemple, la tourelle 12 est, en outre, munie d'un canon de tir 16.

Le véhicule 10 comporte une paroi 18 délimitant un espace intérieur 20 d'un espace extérieur 22.

Plus précisément, dans le contexte militaire, l'espace intérieur 20 est l'espace à sécuriser puisqu'il s'agit de l'espace dans lequel vont évoluer le ou les opérateurs alors que l'espace extérieur 22 est le théâtre d'opérations dans lequel la sécurité est plus difficile à assurer selon l'environnement considéré.

La paroi 18 est réalisée en un matériau suffisamment résistant pour former un blindage du véhicule 10, le véhicule 10 devant résister à des tirs.

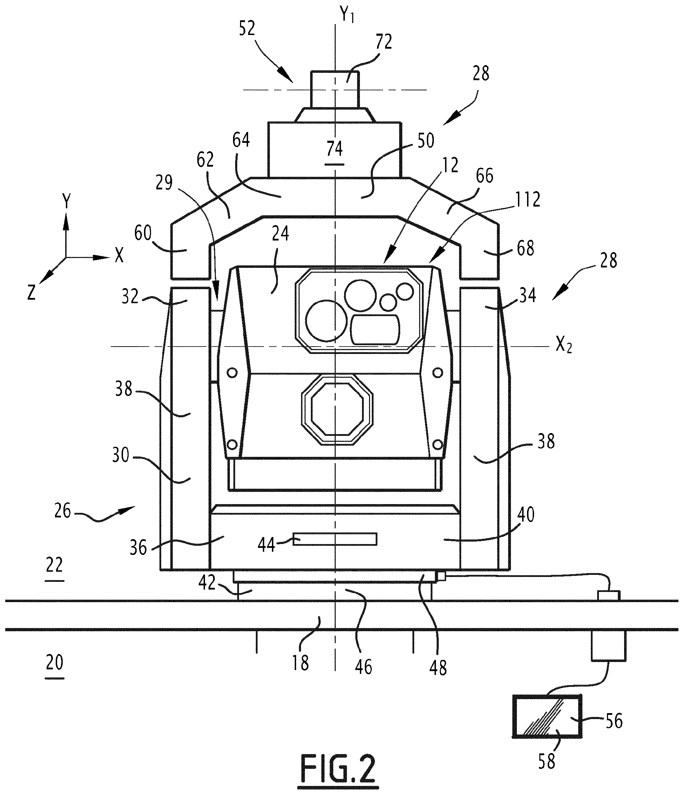

Le système optronique 14 est décrit plus précisément en référence à la figure 2.

Par commodité, il est défini des directions.

Une direction normale à la paroi 18 est symbolisée par un axe Y sur la figure 2. Cette direction correspond à la direction de gisement et sera dénommée direction de gisement Y dans la suite de la description.

Il est également défini une première direction transversale située dans le plan de la figure 2, la première direction transversale étant perpendiculaire à la direction de gisement. Cette direction est symbolisée par un axe X sur la figure 2. Cette direction correspond à la direction de site et sera dénommée direction de site X dans la suite de la description.

Il est également défini une deuxième direction transversale symbolisée par un axe Z sur la figure 2. La deuxième direction transversale Z est perpendiculaire à la direction de gisement Y et à la direction de site X.

Le système optronique 14 comporte une tête optronique 24, un support 26 et un dispositif de vision hémisphérique 28.

La tête optronique 24 est une tête optronique 24 d'observation d'une partie de l'environnement de l'espace extérieur 22 du véhicule 10.

La tête optronique 24 comporte, par exemple, des caméras propres à capter la lumière visible, en noir et blanc et/ou en couleur, des caméras infrarouges, des télémètres, ou encore des pointeurs. Les vidéos et les données collectées par la tête optronique 24 sont transmises vers l'intérieur du véhicule 10 par l'intermédiaire de signaux analogiques et/ou numériques.

En ce sens, la tête optronique 24 est une tête optronique 24 à vision indirecte, c'est-à-dire une tête optronique 24 assurant une vision via un écran qui suppose le fonctionnement de l'ensemble des éléments intervenant dans la visualisation de la scène sur l'écran.

Le support 26 est positionné sur la tourelle 12.

Le support 26 est mobile autour d'un premier axe Y1, le premier axe Y1 étant parallèle à la direction de gisement Y.

Le support 26 est destiné à maintenir la tête optronique 24 mobile par rapport à un deuxième axe X2. La tête optronique 24 est montée rotative sur le support 26 autour du deuxième axe X2.

Selon l'exemple illustré, le deuxième axe X2 est parallèle à la direction en site X.

Le support 26 comporte une paroi qui permet de délimiter un volume intérieur 30.

Le support 26 comporte deux bras latéraux 32, 34 et un socle 36.

Les deux bras latéraux 32, 34 et le socle 36 sont agencés pour former une pièce sensiblement en forme de U.

Dans l'exemple particulier de la figure 2, les deux bras latéraux 32, 34 sont identiques.

Chacun des deux bras latéraux 32, 34 est situé de part et d'autre de la tête optronique 24 pour assurer le maintien de la tête optronique 24.

Chacun des bras latéraux 32, 34 s'étend principalement le long de la direction de gisement Y.

La paroi de chaque bras latéral 32, 34 est en alliage à base d'aluminium ou tout autre matériau.

Pour chacun des bras latéraux 32, 34, il est défini un volume intérieur 30 appelé volume latéral 38.

Selon l'exemple représenté, chaque bras latéral 32, 34 présente une forme sensiblement parallélépipédique.

Le socle 36 présente deux parties : une partie centrale 40 reliant les deux bras latéraux 32, 34 et une partie d'interfaçage 42 avec la paroi 18.

La partie centrale 40 est évidée de sorte qu'un volume central 44 peut également être défini pour la partie centrale 40.

En l'occurrence, le volume intérieur du support 26 est donc la somme des volumes latéraux 38 et du volume central 44.

La partie d'interfaçage 42 est une interface mécanique ayant, selon le cas de la figure 2, une forme de cylindre avec une partie centrale 40 évidée, la partie d'interfaçage 42 délimitant un volume intérieur 46.

La partie d'interfaçage 42 supporte une interface 48 délimitant le volume intérieur 46. La forme de l'interface est choisie de sorte à s'adapter à la forme de la tête optronique 24.

Le volume délimité par la somme du volume intérieur 46 de l'interface 42 et du volume central 44 de la partie centrale 40 comporte des moteurs, des résolveurs destinés à commander les moteurs, ainsi qu'un joint tournant électrique et/ou une fibre optique propres à transmettre des signaux ou données entre la tête optronique 24 et l'intérieur du véhicule 10.

Les moteurs sont propres à entraîner un mouvement de rotation du support 26 par rapport à la paroi 18 autour du premier axe Y1.

La partie d'interfaçage 42 est, selon les modes de réalisation, fixe ou élévatrice. Dans le cas de la figure 2, la partie d'interfaçage 42 est fixe.

Le dispositif de vision hémisphérique 28 comporte une interface mécanique 50, un capteur 52, un calculateur 54, une unité d'affichage 56 et une interface homme-machine 58.

L'interface mécanique 50 est fixée sur le support 26 rotatif.

L'interface mécanique 50 est solidaire du support 26 rotatif.

Dans l'exemple proposé, l'interface mécanique 50 est fixée sur chaque bras latéraux 32, 34.

Selon l'exemple de la figure 2, l'interface mécanique 50 comporte cinq parties : une première partie d'extrémité 60, une première partie intermédiaire 62, une partie médiane 64, une deuxième partie intermédiaire 66 et une deuxième partie d'extrémité 68.

La première partie intermédiaire 62 relie la première partie d'extrémité 60 à la partie médiane 64 tandis que la deuxième partie intermédiaire 66 relie la deuxième partie d'extrémité 68 à la partie médiane 64.

Chaque partie d'extrémité est relié à un bras latéral 32, 34 respectif.

Le capteur 52 est propre à capter des images d'une partie de l'environnement du véhicule 10.

Le capteur 52 est fixé sur la partie médiane 64 de l'interface mécanique 50 par des barres de maintien. Les barres ne sont pas représentées sur les figures dans un souci de clarté de ces figures.

Par exemple, le capteur 52 est fixé par trois barres de maintien.

Dans l'exemple décrit, les barres de maintien sont équiréparties à 120°.

La partie médiane 64 étant solidaire du support 26, le capteur 52 est solidaire du support 26.

Le capteur 52 correspond au point le plus haut du système optronique 14. La distance entre le capteur 52 et la paroi 18 le long de l'axe Z permet de définir la hauteur du système optronique 14. Dans l'exemple décrit, la hauteur du système optronique 14 est inférieure à 1 mètre.

Le capteur 52 comporte un système optique 72 à champ hémisphérique et un détecteur 74.

Selon une variante, le capteur 52 comporte une pluralité de détecteur 74 munis chacun d'une optique, l'ensemble des optiques formant un système optique 72 à champ hémisphérique.

Dans le cas illustré, Le système optique 72 présente un champ couvrant un domaine angulaire supérieur ou égal à un hémisphère dont l'axe est orienté vers le zénith.

Pour cette raison, le système optique 72 est qualifié de système optique 72 à « champ hémisphérique ». Par cette expression, il est entendu que le champ couvert par le système optique 72 est supérieur ou égal à un hémisphère. Le terme « champ supra hémisphérique » est parfois utilisé pour désigner cette notion.

Le système optique 72 présente une grande ouverture.

Le système optique 72 est à résolution variable dans le champ.

Selon un mode de réalisation particulier, le système optique 72 présente d'importantes distorsions afin d'offrir des résolutions augmentées dans certains domaines angulaires, par exemple dans le plan équatorial, pour augmenter la portée de l'optique.

Par exemple, le système optique 72 comporte un objectif fisheye, raccourci en fisheye (de l'anglais fish eye signifiant « oeil de poisson »), ou objectif hypergone présentant une focale de 4,5 mm (millimètres) et 12 pixels par degré. Le système optique 72 comporte alors un ou deux objectifs tels que décrits précédemment pour couvrir un champ de 360°.

Selon un autre exemple, le système optique 72 comporte une pluralité d'objectifs ayant un champ moins étendue qu'un champ hémisphérique. A titre d'illustration, le système optique 72 est un ensemble de trois objectifs fisheye, chaque objectif présentant une focale de 8 mm et 21 pixels par degré sur 120°.

Selon encore un autre exemple, le système optique 72 est une optique à très forte distorsion permettant de couvrir un champ de 360°, avec une résolution radiale variable suivant l'angle de site pouvant aller de 20 à 22 pixels/° ou plus en résolution radiale.

Le détecteur 74 est une matrice de photodétecteurs permettant de définir des pixels.

Le détecteur 74 est situé dans le plan focal du système optique 72.

Par exemple, le détecteur 74 est une matrice CMOS 4T (à 4 transistors dans le pixel) ou plus, fonctionnant à 25Hz, à faible bruit (inférieur à 2 électrons) et grande dynamique (supérieure à 80dB).

Chaque pixel est à double échantillonnage corrélé et la conversion charges-tension est réalisée dans chaque pixel, ce qui assure au détecteur 74 un très faible niveau de bruit et une grande dynamique instantanée.

En outre, le contrôle du temps d'exposition (ou d'intégration), depuis des durées inférieures à 10 ps à des durées de 40 ms par exemple, permet au détecteur 74 de fonctionner de jour et de nuit. En ambiance de nuit, à très faible niveau, il est possible d'augmenter le temps d'exposition par exemple à 100 ms et de réduire la cadence images par exemple à 10 Hz afin d'améliorer le rapport signal à bruit de l'image restituée.

Le calculateur 54 est adapté à traiter les images que le capteur 52 est propre à capter pour obtenir des informations sur l'environnement du véhicule 10.

Typiquement, le calculateur 54 est propre à traiter des données ayant une taille de plusieurs Gigabits par seconde.

Ainsi, le calculateur 54 est propre à fonctionner à une cadence supérieure ou égale à 1 Gigabit par seconde.

Dans l'exemple décrit, parmi les informations que le calculateur 54 est propre à obtenir, il y a les informations de détection de cible mobile, des informations de détection d'alerte laser et des informations de détection de départ de missiles.

Le calculateur 54 est dans le volume intérieur.

Plus précisément, le calculateur 54 est dans le volume intérieur du socle 36, donc positionné avant le joint tournant.

L'unité d'affichage 56 est propre à afficher des images traitées par le calculateur 54.

L'unité d'affichage 56 est positionnée dans l'espace intérieur 20.

L'interface homme-machine 58 permet à un opérateur de contrôler le dispositif de vision hémisphérique 28.

L'interface homme-machine 58 est positionnée dans l'espace intérieur 20.

Selon l'exemple de la figure 2, l'unité d'affichage 56 et l'interface homme-machine 58 sont confondues.

Le fonctionnement du système optronique 14 va maintenant être décrit.

En fonctionnement, le système optronique 14 a plusieurs fonctions : d'une part, grâce à la tête optronique 24, le système optronique 14 permet d'observer une partie de la scène en utilisant différentes caméras pouvant réaliser des images dans différentes bandes spectrales grâce aux différentes caméras, comme par exemple dans le spectre visible, et dans l'infrarouge (rayonnement dont la longueur d'onde est comprise entre 800 nanomètres et 14 micromètres). Les caméras permettent notamment de réaliser des images dans les domaines suivants : PIR, SWIR, IR2 (longueur d'onde comprise entre 3 micromètres et 5 micromètres) et IR3 (longueur d'onde comprise entre 7,5 micromètres et 14 micromètres).

Lorsque l'opérateur commande une rotation autour du premier axe Y1 du support 26 maintenant la tête optronique 24, le support 26 tourne et l'observateur peut observer une autre partie de la scène.

D'autre part, grâce au dispositif de vision hémisphérique 28, le calculateur 54 dispose d'informations supplémentaires sur l'environnement du véhicule 10. En l'occurrence, le calculateur 54 est propre à fournir des des images en temps réel à 360° avec une élévation comprise entre 75° et -15° (ou plus en site haut et moins en site bas) dont chaque point est référencé avec précision. Le calculateur 54 est également propre à fournir des informations de détection de cible mobile, des informations de détection d'alerte laser et des informations de détection de départ de missiles.

Le positionnement spécifique du dispositif de vision hémisphérique 28 donne la possibilité au dispositif de vision hémisphérique 28 d'observer sans masquage l'environnement du véhicule 10. Notamment, le dispositif de vision hémisphérique 28 est le point le plus haut du véhicule 10, ce qui limite le masquage par d'autres éléments du véhicule 10.

Par ailleurs, un tel positionnement permet de mieux couvrir l'illumination hors d'axe, ce qui résulte en une détection d'alerte laser améliorée.

Le positionnement sur le support 26 rotatif assure également une stabilisation en rotation du capteur 52 (asservissement mécanique en gisement). Le phénomène de défilement de l'image dû au mouvement en rotation du véhicule 10 ou de la tourelle 12 est ainsi fortement réduit.

Le système optronique 14 proposé comporte un unique dispositif de vision hémisphérique 28, ce qui évite de positionner une pluralité de dispositifs de vision hémisphérique.

Il en résulte une place accrue sur le véhicule 10 ainsi qu'un gain en termes de poids.

De plus, cela évite la difficulté d'avoir à fusionner des images provenant de dispositifs de vision hémisphérique.

Le système optronique 14 comporte un unique calculateur 54, ce qui simplifie les transferts d'informations. En particulier, l'ensemble des informations est centralisé en un seul endroit. La simplification des transferts d'informations implique une diminution des raccordements à effectuer, ce qui résulte également en un gain en termes de poids pour le véhicule 10.

Le système optronique 14 est ainsi propre à fonctionner avec une haute fréquence de rafraichissement.

Le calculateur 54 a, en outre, accès à des informations supplémentaires qui sont le positionnement du support 26 rotatif, ce qui permet d'optimiser la qualité des informations fournies par le système optronique 14.

Le positionnement du calculateur 54 permet aussi de réduire fortement la signature thermique du système optronique 14.

Le positionnement sur le support 26 rotatif octroie aussi une possibilité de tourner le système optique 72 pour rendre visible des zones de l'environnement qui seraient occultées par les barres de maintien du capteur 52.

La possibilité de tourner le capteur 52 en gisement permet d'envisager d'autres modes de réalisation utilisant une telle possibilité.

Par exemple, une rotation lente en gisement du support 26 rotatif permet d'envisager des techniques de superrésolution sur un axe pour le dispositif de vision hémisphérique 28.

Cela permet d'augmenter encore la qualité des informations fournies par le calculateur 54.

Selon un autre exemple, le système optronique 14 est pourvu d'un blindage de protection indépendant du support 26 rotatif.

Le blindage est un blindage de protection protégeant le système optique 72 en laissant juste le système optique 72 sans occultation. La protection du blindage permet de protéger contre les éclats créés par une explosion ou contre les tirs de balles. Il est à noter que le blindage permet aussi de réduire la signature thermique du système optronique 14.

Pour ce blindage, il est encore possible selon un mode de réalisation particulier d'exploiter la rotation de l'optique. Ainsi, le système optronique 14 est pourvu d'un dispositif de nettoyage du système de vision hémisphérique, le dispositif de nettoyage comportant une buse de projection, la buse de projection étant positionnée sur le blindage.

La buse de projection est fixe et apte à envoyer un jet d'eau par exemple.

En variante, la buse de projection est apte à envoyer un jet d'air.

Le nettoyage du système optique 72 se fait par rotation du support.

D'autres modes de réalisation sont également envisageables pour le système optronique 14 proposé.

Selon un mode de réalisation, le système optique 72 comporte un unique objectif Fisheye. Cela permet de simplifier les raccordements et d'utiliser des traitements d'image plus simple.

Selon un autre mode de réalisation, le système optique 72 comporte une pluralité d'optiques dissociées.

En outre, le système optronique 14 est propre à fonctionner sur une pluralité de bandes spectrales, comme par exemple dans le spectre visible, et dans l'infrarouge (rayonnement dont la longueur d'onde est comprise entre 800 nanomètres et 14 micromètres). Par exemple, le système optronique 14 fonctionne sur les bandes spectrales suivantes : PIR, SWIR, IR2 (longueur d'onde comprise entre 3 micromètres et 5 micromètres) et IR3 (longueur d'onde comprise entre 7,5 micromètres et 14 micromètres). Pour cela, le système optronique 14 comporte, par exemple, un capteur 52 fonctionnant sur une première bande spectrale et une tête optronique 24 fonctionnant sur une deuxième bande spectrale, la deuxième bande spectrale étant distincte de la première bande spectrale.

Selon encore un autre mode de réalisation, le système optronique 14 comporte à la fois des composants permettant d'assurer de l'imagerie passive et de l'imagerie active.

Dans chacun des modes de réalisation présentés, le système optronique 14 est apte à fournir les informations sur l'environnement du véhicule 10, notamment des images en temps réel à 360° avec une élévation comprise entre 75° et -15° (ou plus) dont chaque point est référencé avec précision, des informations de détection de cible mobile, des informations de détection d'alerte laser et des informations de détection de départ de missiles. Le système optronique 14 est, en outre, de mise en oeuvre aisée.

Le système optronique 14 proposé est utilisable sur des véhicules non blindés, des navires, des hélicoptères, des avions ou des bâtiments. L'ensemble des exemples précédents est désigné par le terme générique de « plate-forme ».

De manière générale, la plate-forme comporte une paroi 18 sur laquelle est positionné le support 26. Lorsque la plate-forme comporte une partie de la paroi 18 correspondant à l'endroit le plus haut pour la plate-forme, le support 26 est avantageusement positionné sur ladite partie de paroi 18 pour bénéficier du champ de vision le plus dégagé possible. Dans l'exemple décrit, la partie de paroi correspond à la tourelle 12.

La présente invention couvre toutes les combinaisons techniquement possibles des modes de réalisation qui viennent d'être présentés précédemment.

## Revendications

1. Système optronique (14) pour plate-forme, le système optronique (14) comportant :
- un support (26) rotatif autour d'un premier axe (Y1), le support (26) définissant un volume intérieur (30), le support (26) comportant deux bras latéraux (32, 34), un socle (36) et un joint tournant,
- une tête optronique (24) d'observation d'une partie de l'environnement de la plate-forme, la tête optronique (24) étant montée rotative sur le support (26) autour d'un deuxième axe (X2), le deuxième axe (X2) étant perpendiculaire au premier axe (Y1),
- un unique dispositif de vision hémisphérique (28) comportant un capteur (52) avec un système optique (72) présentant un champ au moins hémisphérique, le capteur (52) étant propre à capter des images d'une partie de l'environnement de la plate-forme, et un calculateur adapté à traiter les images que le capteur (52) est propre à capter,
le calculateur étant propre à fournir des informations de détection de cible mobile, des informations de détection d'alerte laser et des informations de détection de départ de missiles,
le calculateur étant propre à fonctionner à une cadence supérieure à 1 Gigabit par seconde et étant propre à traiter des données ayant une taille de plusieurs Gigabits par seconde,
le calculateur étant dans le volume intérieur (30) et le capteur (52) étant solidaire du support (26), le calculateur étant dans le volume intérieur du socle (36) et positionné avant le joint tournant,
le capteur (52) comportant un détecteur matriciel situé dans le plan focal du système optique (72), des moyens d'affichage des images traitées par le capteur (52), le détecteur matriciel étant à cadence vidéo et comprenant LxC pixels, avec L et C > 2000, chaque pixel étant double échantillonnage corrélé et apte à assurer une conversion charges-tension, et 2*C éléments de conversion analogique-numérique parallélisés, chaque élément de conversion comportant lui-même un premier convertisseur analogique-numérique à sortie à faible niveau et fort gain et un deuxième convertisseur analogique-numérique à sortie à niveau élevé et faible gain, le système optique (72) présentant une focale contrôlée en fonction de l'angle de site, la focale étant la plus longue dans le plan équatorial, et a une ouverture numérique comprise entre 0,9 et 1,6, le calculateur comprenant des moyens de correction des non uniformités du détecteur au moyen de tables corrections adaptées en fonction de la température et du temps d'exposition du détecteur, des moyens de sommation pondérée, de plusieurs pixels voisins, des moyens d'adaptation de la dynamique de l'image captée à la dynamique de la scène, des moyens de compression de la dynamique de l'image captée en fonction des bruits temporels du détecteur, croissant avec l'éclairement de la scène, des moyens d'adaptation de la dynamique de l'image captée à la dynamique des moyens d'affichage et/ou à celle de l'œil.

2. Système optronique selon la revendication 1, dans lequel le capteur (52) est positionné sur une interface mécanique (50), l'interface mécanique (50) étant fixée sur le support (26).

3. Système optronique selon la revendication 2, l'interface mécanique (50) étant fixée sur chaque bras latéraux (32, 34).

4. Système optronique selon l'une quelconque des revendications 1 à 3, dans lequel le système optronique (14) est pourvu d'un blindage de protection indépendant du support (26).

5. Système optronique selon la revendication 4, dans lequel le système optronique (14) est pourvu d'un dispositif de nettoyage du dispositif de vision hémisphérique (28), le dispositif de nettoyage comportant une buse de projection, la buse de projection étant positionnée sur le blindage.

6. Système optronique selon l'une quelconque des revendications 1 à 5, dans lequel le système optique (72) comporte une pluralité d'objectifs, chaque objectif ayant un champ moins étendu qu'un champ hémisphérique.

7. Système optronique selon l'une quelconque des revendications 1 à 6, le capteur (52) comporte une pluralité de détecteurs (74) munis chacun d'une optique, l'ensemble des optiques formant le système optique (72).

8. Plate-forme comportant un système optronique (14) selon l'une quelconque des revendications 1 à 7.

9. Plate-forme selon la revendication 8, dans lequel le système optronique (14) est unique.

10. Plate-forme selon la revendication 8 ou 9, la plate-forme étant un véhicule (10) comportant une tourelle (12), le support (26) étant positionné sur la tourelle (12).

## Patentansprüche

1. Optronisches System (14) für Plattform, wobei das optronische System (14) aufweist:
- eine rotierende Halterung (26) um eine erste Achse (Y1), wobei die Halterung (26) ein Innenvolumen (30) definiert, wobei die Halterung (26) zwei Seitenarme (32, 34), einen Sockel (36) und eine Drehverbindung aufweist,
- einen optronischen Kopf (24) zur Beobachtung eines Teils der Umgebung der Plattform, wobei der optronische Kopf (24) um eine zweite Achse (X2) drehbar auf der Halterung (26) angebracht ist, wobei die zweite Achse (X2) senkrecht zur ersten Achse (Y1) ist,
- eine einzige halbkugelförmige Sichtvorrichtung (28) mit einem Sensor (52) mit einem optischen System (72), das mindestens ein halbkugelförmiges Feld aufweist, wobei der Sensor (52) geeignet ist, Bilder eines Teils der Umgebung der Plattform zu erfassen, und einen Rechner, der geeignet ist, die Bilder zu verarbeiten, die der Sensor (52) erfassen kann,
wobei der Rechner imstande ist, Informationen über die Erfassung eines beweglichen Ziels, Informationen über die Detektion von Laserwarnungen und Informationen über die Detektion von Raketenstarts bereitzustellen,
wobei der Rechner imstande ist, mit einer Taktfrequenz von über 1 Gigabit pro Sekunde zu arbeiten und imstande ist, Daten mit einer Größe von mehreren Gigabit pro Sekunde zu verarbeiten,
wobei sich der Rechner in dem Innenvolumen (30) befindet und der Sensor (52) fest mit der Halterung (26) verbunden ist, wobei der Rechner in dem Innenvolumen des Sockels (36) und vor der Drehverbindung positioniert ist,
wobei der Sensor (52) einen Matrixdetektor, der sich in der Fokalebene des optischen Systems (72) befindet, aufweist, Anzeigemittel der von dem Sensor (52) verarbeiteten Bilder, wobei der Matrixdetektor eine Videotaktfrequenz hat und LxC-Pixel mit L und C > 2000 umfasst, wobei jedes Pixel doppelt korreliert gesampelt wird und imstande ist, eine Ladung-Spannungs-Konversion abzusichern, und 2*C parallelisierte Analog-Digital-Konversionselemente, wobei jedes Konversionselement selbst einen ersten Analog-Digital-Wandler mit Ausgang auf niedrigem Niveau und hohem Gain und einen zweiten Analog-Digital-Wandler mit Ausgang auf hohem Niveau und niedrigem Gain aufweist, wobei das optische System (72) eine in Abhängigkeit vom Höhenwinkel kontrollierte Brennweite aufweist, wobei die Brennweiter länger in der äquatorialen Ebene ist und eine digitale Öffnung zwischen 0,9 und 1,6 hat, wobei der Rechner Korrekturmittel der Ungleichmäßigkeiten des Detektors mit Hilfe von in Abhängigkeit von der Temperatur und der Expositionszeit des Detektors angepasste Korrekturtabellen, Mittel für eine gewichtete Summenbildung von mehreren benachbarten Pixeln, Mittel zur Anpassung der Dynamik des erfassten Bildes an die Dynamik der Szene, Mittel zur Kompression der Dynamik des erfassten Bildes in Abhängigkeit von den temporären Störungen des Detektors, die mit der Beleuchtung der Szene zunehmen, Mittel zur Anpassung der Dynamik des erfassten Bildes an die Dynamik der Anzeigemittel und/oder die Dynamik des Auges umfasst.

2. Optronisches System nach Anspruch 1, wobei der Sensor (52) auf einer mechanischen Schnittstelle (50) positioniert ist, wobei die mechanische Schnittstelle (50) an der Halterung (26) befestigt ist.

3. Optronisches System nach Anspruch 2, wobei die mechanische Schnittstelle (50) an jedem Seitenarm (32, 34) befestigt ist.

4. Optronisches System nach einem der Ansprüche 1 bis 3, wobei das optronische System (14) mit einer von der Halterung (26) unabhängigen Schutzpanzerung versehen ist.

5. Optronisches System nach Anspruch 4, wobei das optronische System (14) mit einer Reinigungsvorrichtung für die halbkugelförmige Sichtvorrichtung (28) versehen ist, wobei die Reinigungsvorrichtung eine Strahldüse aufweist, wobei die Strahldüse auf der Abschirmung positioniert ist.

6. Optronisches System nach einem der Ansprüche 1 bis 5, wobei das optische System (72) eine Vielzahl von Objektiven aufweist, wobei jedes Objektiv ein Feld hat, das weniger ausgedehnt ist als ein halbkugelförmiges Feld.

7. Optronisches System nach einem der Ansprüche 1 bis 6, wobei der Sensor (52) eine Vielzahl von Detektoren (74) aufweist, die jeweils mit einer Optik versehen sind, wobei die Gesamtheit der Optiken das optische System (72) bildet.

8. Plattform mit einem optronischen System (14) nach einem der Ansprüche 1 bis 7.

9. Plattform nach Anspruch 8, wobei das optronische System (14) einzig ist.

10. Plattform nach Anspruch 8 oder 9, wobei die Plattform ein Fahrzeug (10) ist, das einen Turm (12) aufweist, wobei die Halterung (26) auf dem Turm (12) positioniert ist.

## Claims

1. An optronic system (14) for a platform, the optronic system (14) including:
- a support (26) that can be rotated about a first axis (Y1), the support (26) defining an inner space (30), the support (26) comprising two lateral arms (32, 34), a base (36) and a rotary joint,
- an optronic head (24) for observing part of the surroundings of the platform, the optronic head (24) being mounted such that it rotates about a second axis (X2), the second axis (X2) being perpendicular to the first axis (Y1),
- a unique hemispherical viewing device (28) comprising a sensor (52) with an optical system (72) having an at least hemispherical field, the sensor (52) being able to detect images of part of the surroundings of the platform, and a calculator (54) for processing the images that the sensor (52) detects,
the calculator (54) being capable of supplying moving target detection information, laser alert detection information and missile launch detection information.
the calculator (54) being capable of operating at a pace greater than 1 Gigabit per second and being capable of treating data having a size superior to several Gigabits per second,
the calculator (54) being in the inner space (30) and the sensor (52) being secured to the support (26), the calculator being in the inner volume of the base (36) and positioned before the rotary joint,
the sensor (52) including a matrix detector located in the focal plane of the optical system (72), means for displaying images processed by the sensor (52), the matrix detector being at video rate and comprising LxC pixels, with L and C > 2000, each pixel being double sampling correlated and suitable for ensuring a charge-voltage conversion, and 2*C parallelized analog-digital conversion elements, each conversion element in turn including a first analog-digital conversion element with an output having a low level and high gain and a second analog-digital conversion element with an output having a high level and low gain, the optical system (72) having a focal distance controlled as a function of the angle of elevation, the focal distance being the longest in the equatorial plane, and has a numerical aperture of between 0.9 and 1.6, the calculator comprising means for correcting nonuniformities of the detector using correction tables adopted as a function of the temperature and the exposure time of the detector, weighted summing means, for several adjacent pixels, means for adapting the dynamics of the captured image to the dynamics of the scene, means for compressing the dynamics of the captured image as a function of the temporal noises of the detector, increasing with the illumination of the scene, means for adapting the dynamics of the captured image to the dynamics of the display and/or to those of the eye.

2. The optronic sensor according to claim 1, wherein the sensor (52) is positioned on a mechanical interface (50), the mechanical interface (50) being fastened on the support (26).

3. The optronic system according to claim 2, wherein the mechanical interface (50) being fastened on each lateral arm (32, 34).

4. The optronic system according to any one of claims 1 to 3, wherein the optronic system (14) is provided with a protective shield independent of the support (26).

5. The optronic system according to claim 4, wherein the optronic system (14) is provided with a device for cleaning the hemispherical viewing device (28), the cleaning device including a spray nozzle, the spray nozzle being positioned on the shield.

6. The optronic system according to any one of claims 1 to 5, wherein the optical system (72) includes a plurality of objectives having a less extensive field than a hemispherical field.

7. The optronic system according to any one of claims 1 to 6, wherein the sensor (52) includes a plurality of detectors (74) each equipped with an optic, the set of optics forming the optical system (72).

8. A platform including an optronic system (14) according to any one of claims 1 to 7.

9. The platform according to claim 8, wherein the optronic system (14) is unique.

10. The platform according to claim 8 or 9, the platform being a vehicle (10) including a turret (12), the support (26) being positioned on the turret (12).
